# EUROPÄISCHE PATENTSCHRIFT

(11) **EP 1 012 476 B1**
(45) Veröffentlichungstag und Bekanntmachung des Hinweises auf die Patenterteilung: **14.09.2005**
(21) Anmeldenummer: 98947364.0
(22) Anmeldetag: 30.07.1998
(51) Int. Cl.: F02P 5/152

(54) **VERFAHREN ZUR KLOPFREGELUNG IN ZÜNDANLAGEN FÜR BRENNKRAFTMASCHINEN**
METHOD FOR REGULATING KNOCKING IN IGNITION SYSTEMS IN INTERNAL COMBUSTION ENGINES
PROCEDE POUR REGULER LE CLIQUETIS DANS DES ALLUMEURS DESTINES A DES MOTEURS A COMBUSTION INTERNE

(30) Priorität: 27.08.1997 DE 19737257
(43) Veröffentlichungstag der Anmeldung: 28.06.2000
(73) Patentinhaber: ROBERT BOSCH GMBH, 70442 Stuttgart (DE)
(72) Erfinder: TORNO, Oskar, D-71701 Schwieberdingen (DE); KLUTH, Carsten, D-70469 Stuttgart (DE); SLOBODA, Robert, Yokohama 223 (JP); HAEMING, Werner, D-74861 Neudenau (DE); SURJADI, Iwan, D-71665 Vaihingen (DE); BAEUERLE, Michael, D-71706 Markgröningen (DE)
(86) Internationale Anmeldenummer: PCT/DE1998/002183
(87) Internationale Veröffentlichungsnummer: WO 1999/010651

(56) Entgegenhaltungen:
- WO-A-91/10829
- WO-A-96/16269
- FR-A- 2 498 255
- US-A- 4 261 313
- US-A- 4 829 962
- US-A- 5 165 378

## Beschreibung

### Stand der Technik

Die Erfindung geht aus von einem Verfahren zur Klopfregelung nach der Gattung des Hauptanspruchs. Aus der DE 33 13 036 C2 ist bereits eine Klopfregelung bekannt, wobei wenigstens einen Klopfsensor und eine nachgeschaltete Signalaufbereitungsschaltung vorgesehen sind und wobei eine klopfende Verbrennung erkannt wird, wenn das aufbereitete Klopfsensorsignal einen Referenzpegel überschreitet. Zur Verhinderung eines klopfenden Betriebes der Brennkraftmaschine ist eine elektronische Steuervorrichtung vorgesehen, die durch eine entsprechende Steuerung verschiedener Funktionen wie beispielsweise die Zündungsfunktion das Klopfverhalten der Brennkraftmaschine beeinflußt. Hierbei wird beispielsweise bei Erkennung von klopfenden Verbrennungen eine stufenförmige Verstellung der Zündfunkton von der Klopfgrenze weg vorgenommen. Es ist weiterhin bekannt, die Verstellung der Zündfunktion nach klopfender Verbrennung dann stufenförmig zurückzunehmen, wenn keine klopfende Verbrennung mehr auftritt, wobei die stufenförmige Rückverstellung beschleunigt erfolgt, wenn ein transienter Zustand erkannt wird.

### Vorteile der Erfindung

Das erfindungsgemäße Verfahren mit den kennzeichnenden Merkmalen des Hauptanspruchs hat den Vorteil, daß die Differenz der klopfbedingen Zündverstellung in Abhängigkeit der Klopfhäufigkeit ein sehr feines, bedarfgerechtes Verstellen des Zündwinkels durch die Klopfregelung ermöglicht. Desweiteren wird ein viel schnelleres Einschwingen der Klopfregelung auf die aktuelle Klopfgrenze, welche von den aktuellen Betriebsbedingungen wie Last und Drehzahl abhängig ist, erreicht. Schließlich bietet diese Form der Klopfregelung den Vorteil, daß durch die unterschiedlichen klopfregelbedingten Zündwinkeldifferenzen nur geringe Drehmomentenschwankungen auftreten.

Durch in den Unteransprüchen aufgeführte Maßnahmen sind vorteilhafte Weiterbildungen und Verbesserungen des im Hauptanspruch angegebenen Verfahrens möglich. Besonders vorteilhaft ist, daß ein Maß der Klopfhäufigkeit die Anzahl der klopffreien Verbrennungen zwischen zwei klopfenden Verbrennungen oder die Zeit zwischen zwei klopfenden Verbrennungen ist. Ebenso kann die Geschwindigkeit der Rückführung des Zündwinkels über Schrittgröße oder Schrittfrequenz in Abhängigkeit der vorher bestimmten Verstellung von der Klopfgrenze weg erfolgen. Hiermit wird sichergestellt; daß der Zündwinkel bei kleinen Schritten der Spätverstellung viel feiner an die Klopfgrenze zurückgeführt wird, um ein unnötiges Hin- und Herschwingen des Zündwinkels an der Klopfgrenze zu vermeiden.

### Zeichnung

Ausführungsbeispiele der Erfindung sind in der Zeichnung dargestellt und in der nachfolgenden Beschreibung näher erläutert.

Es zeigen:
Figur 1 ein Blockschaltbild des Ausführungsbeispiels und
Figur 2 die Verfahrensschritte des erfindungsgemäßen Verfahrens.

### Beschreibung der Ausführungsbeispiele

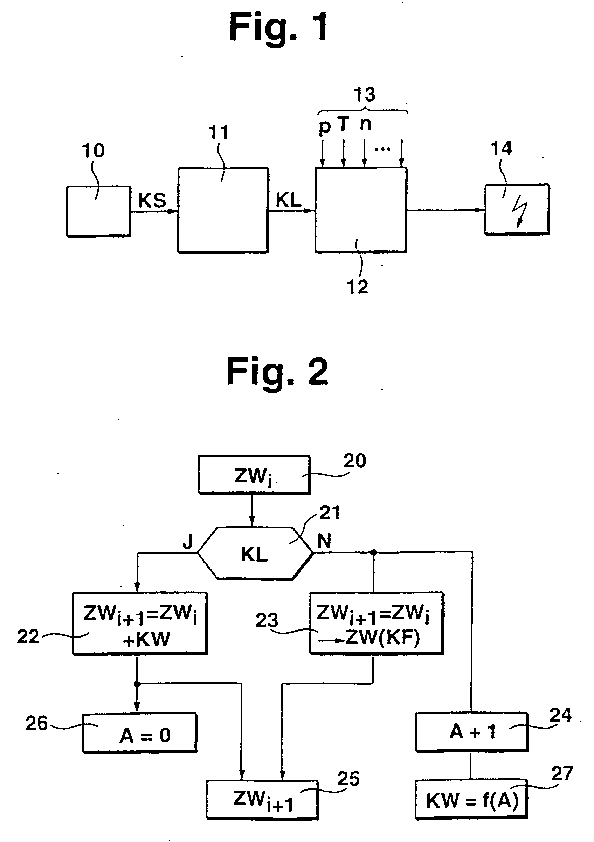

Figur 1 zeigt ein prinzipielles Blockschaltbild zur Klopfregelung. Ein Klopfsensor 10 erfaßt hierbei die Klopfsignale KS und leitet sie an eine Signalauswerteschaltung 11 weiter. Der Ausgang der Signalauswerteschaltung 11 ist an eine elektronische Steuervorrichtung 12 geführt, welcher somit das Signal Klopfen-Ja oder Klopfen-Nein zugeführt wird. Der Ausbau und die Funktionsweise der Signalauswerteschaltung 11 ist beispielsweise in der bereits eingangs zitierten DE 33 13 036 C2 näher erläutert und soll hier nicht nochmal im einzelnen dargestellt werden. Der elektronische Steuervorrichtung 12 sind weiterhin die von ebenfalls nicht dargestellten Brennraumsensoren erfassten Parameter für die Betriebsbedingungen der Brennkraftmaschine wie beispielsweise Druck p, Temperatur T und Drehzahl n als Eingangsgrößen 13 zugeführt. Die elektronische Steuervorrichtung 12 beeinflusst ausgangsseitig eine Zündungsendstufe 14, die die Zündsignale für die Brennkraftmaschine erzeugt. Diese vorzugsweise als Mikrorechner ausgebildete Steuervorrichtung 12 kann natürlich alternativ auch andere Funktionen der Brennkraftmaschine steuern, die einen Einfluß auf das Klopfverhalten ausüben. Die Steuervorrichtung 12 berechnet in Abhängigkeit der als Eingangsgrößen 13 zugeführten Parameter die jeweilige Steuergröße, wobei beispielsweise der Zündzeitpunkt und gegebenenfalls der Schließwinkel mittels eines gespeicherten Kennfeldes errechnet wird. Tritt nun eine klopfende Verbrennung KL auf, so erfolgt eine stufenweise Veränderung des Zündwinkels in Richtung spät und damit von der Klopfgrenze weg. Nach einer vorgebbaren Zeit, in der keine klopfenden Verbrennungen aufgetreten sind oder nach einer vorgebbaren Anzahl klopffreier Verbrennungen, erfolgt eine Rückverstellung des Zündwinkels in Richtung früh bis der Kennfeldzündwinkel ZW(KF) wieder erreicht ist.

Die Durchführung des erfindungsgemäßen Verfahrens soll nun anhand der Figur 2 erläutert werden. In Figur 2 wird in einem ersten Programmschritt 20 der Zündwinkel ZWᵢ beispielsweise in Abhängigkeit der erfaßten Betriebsparameter über ein Kennfeld berechnet und ausgegeben. Dieser Zündwinkel ZWᵢ kann aber auch ein bereits während früherer klopfender Verbrennungen verstellter Zündwinkel sein. Anschließend wird in einer Abfrage 21 kontrolliert, ob beim Verbrennungsvorgang der ausgegebenen Zündung ein Klopfen KL aufgetreten ist. Ist ein Klopfen aufgetreten, dann führt der Ja-Ausgang der Abfrage 21 an den Arbeitsschritt 22, in welchem der ausgegebene Zündwinkel ZWᵢ um einen Korrekturwert KW additiv von der Klopfgrenze weg verändert wird, d.h. der Zündwinkel wird in Richtung spät verändert. War die Verbrennung mit dem ausgegebenenen Zündwinkel ZWᵢ klopffrei, dann wird die Abfrage 21 mit Nein beantwortet. Im Arbeitsschritt 23 wird überprüft, ob der ausgegebene Zündwinkel bereits ein in Richtung spät verstellter Zündwinkel war und dann gegebenenfalls eine schrittweise Rückführung des ausgegebenenen Zündwinkel ZWᵢ wieder in Richtung früh an den Kennfeldzündwinkel herangeführt, ZWᵢ₊₁ = ZWᵢ → ZW(KF). Parallel zu dem Arbeitsschritt 23 wird in einem Arbeitsschritt 24 die Anzahl der klopffreien Verbrennungen gezählt. Dies geschiet beispielsweise, indem ein Register bei jeder klopffreien Verbrennung um Eins erhöht wird (A+1). Die Ausgänge der Arbeitsschritte 22 und 23, in welchen jeweils der Zündwinkel ZWᵢ₊₁ für die darauffolgende Zündung festgelegt wird, sind an einen Arbeitsschritt 25 geführt, der dann diesen Zündwinkel Zwᵢ₊₁ für die darauffolgende Zündung ausgibt.
Der Ausgang des Arbeitsschrittes 22 ist außerdem an einen Arbeitsschritt 26 geführt, in welchem der Wert des Registers zum Zählen der klopffreien Verbrennungen auf Null gesetzt wird. Der Ausgang des Arbeitsschrittes 24, zum Zählen der Anzahl der klopffreien Verbrennung ist außerdem mit einem Arbeitsschritt 27 verbunden. Hier wird der Korrekturwert KW für die Zündwinkelkorrektur in Richtung spät nach einer klopfenden Verbrennung bestimmt. Dieser Korrekturwert KW ist eine Funktion der Klopfhäufigkeit, d.h. je größer der Wert A um so größer ist der Wert der additiven Klopfverstellung und umgekehrt. Anstelle der Anzahl der klopffreien Verbrennungen kann auch die Zeit zwischen zwei klopffreien Verbrennungen erfaßt werden, wobei diese erfaßte Zeit dann noch mit der Drehzahl in Beziehung gebracht werden muß.

Dieser Wert für die Klopfhäufigkeit wird zylinderindividuell bestimmt: Die Anzahl der klopffreien Zündungen ist damit ein Maß für die Klopfhäufigkeit, wobei auch die Zeit zwischen zwei aufeinanderfolgenden Klopfereignissen als Maß für die Klopfhäufigkeit erfaßt werden kann. Auf der Basis dieser Klopfhäufigkeit kann nun in Form einer Kennlinie der additive Zündwinkelspätverstellschritt beim Auftreten von Klopfen berechnet werden. Bei sehr dicht aufeinanderfolgenden Klopfereignissen wird erfahrungsgemäß ein größerer Verstellschritt festgelegt als bei weit auseinanderliegenden Klopfereignissen.

Damit wird ein sehr feines bedarfgerechtes Verstellen des Zündwinkels mittels der Klopfregelung möglich.

## Patentansprüche

1. Verfahren zur Klopfregelung für Brennkraftmaschinen, wobei ein Kennfeldzündwinkel aufgrund erfaßter Betriebsparameter ermittelt wird, welcher bei auftretenden Klopfereignissen mit einem Korrekturwert additiv beaufschlagt wird, **dadurch gekennzeichnet, daß** die Schrittweite der additiven Korrektur des Zündwinkels als eine Funktion der Klopfhäufigkeit festgelegt wird.

2. Verfahren nach Anspruch 1, **dadurch gekennzeichnet, daß** die Anzahl der klopffreien Verbrennungen zwischen klopfenden Verbrennungen eine Maß für die Klopfhäufigkeit ist.

3. Verfahren nach Anspruch 1, **dadurch gekennzeichnet, daß** die Zeit zwischen zwei klopfenden Verbrennungen ein Maß für die Klopfhäufigkeit ist.

4. Verfahren nach Anspruch 2, **dadurch gekennzeichnet, daß** die Anzahl der klopffreien Verbrennungen in einem Register gezählt wird.

## Claims

1. Method for regulating knocking for internal combustion engines, wherein a characteristic diagram ignition angle is determined on the basis of sensed operating parameters and a correction value is additively applied to it when knocking events occur, **characterized in that** the increment of the additive correction of the ignition angle is defined as a function of the frequency of knocking.

2. Method according to Claim 1, **characterized in that** the number of knocking-free combustion processes between knocking combustion processes is a measure of the frequency of knocking.

3. Method according to Claim 1, **characterized in that** the time between two knocking combustion processes is a measure of the frequency of knocking.

4. Method according to Claim 2, **characterized in that** the number of knocking-free combustion processes is counted in a register.

## Revendications

1. Procédé pour réguler le cliquetis pour moteurs à combustion interne, selon lequel on détermine un angle d'allumage de champ de caractéristiques, sur la base de paramètres de fonctionnement saisis, et on lui additionne une valeur de correction en cas de survenance d'événements de cliquetis,
**caractérisé en ce que**
l'incrément de la correction de l'angle d'allumage par addition est établi en tant que fonction de la fréquence du cliquetis.

2. Procédé selon la revendication 1,
**caractérisé en ce que**
le nombre des combustions sans cliquetis entre combustions à cliquetis constitue une mesure de la fréquence du cliquetis.

3. Procédé selon la revendication 1,
**caractérisé en ce que**
le temps entre deux combustions à cliquetis constitue une mesure de la fréquence du cliquetis.

4. Procédé selon la revendication 2,
**caractérisé en ce que**
le nombre des combustions sans cliquetis est compté dans un registre.
